# EUROPEAN PATENT SPECIFICATION

(11) **EP 2 352 388 B1**
(45) Date of publication and mention of the grant of the patent: **03.04.2019**
(21) Application number: 08878795.7
(22) Date of filing: 08.12.2008
(51) Int. Cl.: A23K 10/20, A23K 50/40

(54) **PRECOAGULATION, PREHYDRATION, AND PREGELATINIZATION PROCESS FOR PET FOOD COMPOSITION**
VORKOAGULATIONS-, VORHYDRATISIERUNGS- UND VORVERKLEISTERUNGSVERFAHREN FÜR EIN HAUSTIERFUTTERMITTEL
PROCÉDÉ DE PRÉ-COAGULATION, DE PRÉ-HYDRATATION ET DE PRÉ-GÉLIFICATION UTILISÉ POUR FABRIQUER UNE COMPOSITION ALIMENTAIRE POUR ANIMAL DE COMPAGNIE

(43) Date of publication of application: 10.08.2011
(73) Proprietor: Hill's Pet Nutrition, Inc., Topeka, KS 66603 (US)
(72) Inventor: CHEUK, Wai, Lun, San Diego California 92131 (US); ROMANO, Peter, Antonio, Lawrence KS 66047 (US); RANJAN, Sithara, Sivasankaran, Meriden KS 66512 (US); SCOTT, Kimberly, Lynette, Topeka KS 66605 (US)
(74) Representative: Wichmann, Hendrik
(86) International application number: PCT/US2008/085862
(87) International publication number: WO 2010/068191

(56) References cited:
- WO-A1-99/45794
- WO-A2-2006/074091
- CN-A- 1 558 723
- JP-T- 2004 500 898
- US-A- 4 410 551
- US-A1- 2003 039 738
- US-A1- 2003 099 759
- US-B1- 6 221 380
- US-B1- 6 440 485
- US-B1- 7 258 879

## Description

Pets have been fed "dry" and "wet" diets for many years. "Wet" diets are generally packaged in a can-like container. They are "wet" in appearance because of the moisture therein. Generally two types of wet diets are presently prepared. One is usually referred to in the industry as ground loaf. This is generally prepared by contacting all the key components such as a meat and a carbohydrate source together with water and then heating and mixing together in a series of apparatuses, a single apparatus, or one apparatus, such as a thermal screw cooker/mixer. In this manner all of the major components as well as the minor components such as colorants, oils, vitamins, and vitamin-like materials are combined at an early preprocessing step and all processed together.

Following this procedure an essentially homogeneous, intracellular honeycomb-type mass is produced which is readily packaged into a cylindrical container and forms a "ground loaf" product. A second wet diet is generally referred to in the industry as "chunk and gravy". This wet diet is usually produced by grinding meat, mixing, emulsifying, and then mixing the meat further with water, oil and a carbohydrate source and other materials if desired. This mixture is then fed into a cooking apparatus, emitted therefrom, cut, cooled and then sent for various stage fills. Usually in a two-stage fill, a gravy is added to the chunk. The gravy is prepared in the usual manner, for example, by mixing one or more of a carbohydrate source such as grains, starches, water, vitamins, if desired, and other materials into a mixing tank wherein it is heated and then fed to the container holding the chunky materials, As opposed to the ground loaf, this diet has physically separated, discrete chunks-pieces-of the ground meat and grains as prepared. These discrete particles are present in the gravy-type liquid in the final container. The product produced by "chunks and gravy" process has been used in pet food for many years.

A ground loaf product is generally prepared by mixing the various components, for example, meats, one or more carbohydrate sources, vitamins, minerals and water, usually by steam and added water. The solid components are previously ground together. The total meat, carbohydrate source, water and other component mixture is then heated to a low temperature of 15°C or to a higher range of 80-95°C depending upon the specific components. The products are filled in the cans, seamed and retorted for sterility. The finished product generally has a moisture range of about 65% to about 85%. These ground loaf products can be made on a batch to batch basis or a continuous process in which the three major components, meats, one or more carbohydrate sources and water arc continuously added and mixed together in a thermal screw cooker/mixer. During this process, and particularly at this stage, everything is treated as a single ingredient regardless of the physical or chemical characteristic of the individual ingredient, component and the formulation. Examples of such physical and chemical properties are boiling point difference, gelatinization temperature of the one or more carbohydrate source, protein denaturation temperature of the various meats, and the like. As a result of such processing, there is a wide range of textural differences in terms of softness and firmness, stickiness and mushiness and other easily evaluated parameters of the final composition, which occur from batch to batch and composition to composition.

In a process described in U.S. Pat. No. 6,440,485, the meat components are "thermally set" at and/or below temperatures of protein denaturation of the mixture and heated essentially by themselves, that is, with the essential or total absence of the one or more carbohydrate source, additional water, vitamins, minerals, and the like.

US 2003/039738 A1, US 2003/099759 A1, and US 6,440,485 B1 disclose a method for preparing a pet food product which comprises the steps of heating the meat portion of the composition to a temperature at or below the denaturation point of the meat portion, mixing grains with water at a temperature to achieve hydration, gelatinization and retrogradation of the grains separately from the meat portion, preparing a slurry, and combining the meat grains and slurry.

WO 99/45794 A1 is directed to a canned pet food product comprised of two discrete phases: an outer phase of a thermally gelled mixture comprising a meat source and a gum, and a turbular phase which may comprise a formulated emulsion product.

US 4,410,551 A is directed to an intermediate moisture pet food comprising a coating of fat-encapsulated gravy forming particles. In the process of producing said pet food product, proteinaceous ingredients and farinaceous ingredients are mixed prior to heating.

There is a continuing need for new processes to provide pet food compositions, particularly those that may form loaf products.

### SUMMARY

A process for preparing a pet food composition of the present invention involves the steps of pre-coagulation of a meat portion and pre-hydration and pre-gelatinization of a carbohydrate source, and combining the coagulated meat portion and the pre-hydrated and pre-gelatinized carbohydrate source, as further defined in the claims.

In various embodiments, a carbohydrate source such as a grain is pre-hydrated with process water and then pre-gelatinized to a temperature of gelatinization of the specific carbohydrate source in order to set the starch or to complete the starch reaction, without interference from meat/slurry components. Separately, a meat portion or meat slurry is pre-coagulated at a temperature above the temperature of protein denaturation to retain natural and discrete identities of skeletal muscles and/or meat by-products.

Once the carbohydrate source and available water has been pre-hydrated and pre-gelatinized, and the meat portion or slurry has been pre-coagulated, the two components are mixed with further liquids in a continuous or batch mixer to form a homogeneous matrix to be filled into cans and seamed, ready to be sterilized or retorted.

As a result of the process, the product formed may be a homogeneous loaf product having a friable texture with lesser tendency to have a soft sticky, pasty, or mushy texture, Aesthetically, wholesome, discrete, and naturally irregular skeletal muscles appear throughout the entire loaf matrix. Palatability studies show that the diets are preferred by animals by virtue of a friable texture, resulting in compositions that do not stick to the upper cavity of the mouth and do not tend to choke the animals.

### BRIEF DESCRIPTION OF THE DRAWINGS

The drawings described herein are for illustrative purposes only of selected embodiments and not all possible implementations, and are not intended to limit the scope of the present disclosure.
FIG. 1 shows a schematic flow diagram of a process for making a pet food composition with discrete composition.
FIG. 2 illustrates a continuous process.

### DETAILED DESCRIPTION OF THE INVENTION

In one embodiment, a process is provided for preparing a pet food composition based on a meat and a carbohydrate source, The carbohydrate source may be provided in a grain mix as further described herein, as further defined in the claims. As is typical of pet food formulations, particularly those for canines, the composition is relatively high in one or more carbohydrate sources such as grains, wherein the one or more carbohydrate source is from about 10 to about 35%, or from about 13 to about 28% by weight of the composition. The process involves heating a meat portion of the composition to a temperature above the denaturization point of the proteins in the meat portion. This "pre-coagulation" step results in the preparation of a pre-coagulated meat composition. Separately, one or more carbohydrate sources are mixed with water to pre-hydrate the carbohydrate source and form a pre-hydrated composition. Following pre-hydration, or at the same time as pre-hydration, the carbohydrate source is gelatinized by heating the pre-hydrated carbohydrate source to a temperature at which the gelatinization reaction occurs. The resulting gelatinized carbohydrate composition is then combined with the pre-coagulated meat composition and optionally heated for a further time to make a pet food composition ready for filling into cans. In various embodiments, the step of combining the pre-coagulated meat composition in the gelatinized carbohydrate composition includes the further step of combining with a liquid composition that contains at least one of a colorant, a flavorant, a fat, and an oil.

The meat portion is heated to a temperature above the denaturation point of the meat protein. In one embodiment, the meat portion contains meat or meat by-products from cattle and the meat portion is heated above 80°C in the pre-coagulation step. It is generally preferred to heat at a temperature above the denaturation point, for example in a range from about 2°C to about 6°C above the denaturation temperature.

In various embodiments, the steps of forming the pre-coagulated meat composition and the pre-hydrated and pre-gelatinized carbohydrate composition are carried out in thermoscrew cooker/mixers. Typical residence times in a thermoscrew cooker used for gelatinization of the one or more carbohydrate source is about 60 to 90 seconds, wherein the temperature at the outlet of the thermoscrew cooker is about 80°C.

The pet food composition contains a relatively high level of one or more carbohydrate sources, such as from about 10 to about 35% by weight or from about 13 to 28% by weight of the one or more carbohydrate source. In a representative embodiment, the carbohydrate source is about 18% of the loaf composition by weight, and can generally vary from about 13% to about 28%. In this aspect, a carbohydrate source refers to all grains, ground grain, flour, or starches used in formulation of the loaf product, including starches derived from non-grain sources such as potato starch.

In another embodiment, a process for preparing a pet food composition comprises,
(a) pre-coagulating a meat portion by heating the meat portion to a temperature about 2°C to about 6°C higher than the thermal denaturation point, to form a coagulated meat composition;
(b) combining a carbohydrate source and water and cooking at a temperature sufficient to pre-hydrate and pre-gelatinize the carbohydrate source, wherein the carbohydrate source comprises one or more of grains, ground grains, partially ground grains, flour, and starch;
(c) combining the products of steps (a) and (b); and
(d) heating the combined products of step (c);
wherein the meat portion is 15 to 30% by weight of the pet food composition and the carbohydrate source is 13 to 28% by weight of the pet food composition.

In various embodiments, the meat portion comprises meat and/or meat by-products. In various embodiments, the carbohydrate source contains grain components derived from one or more of corn, wheat, potato, rice, oat, barley, mill, flax, fibrim, peanut hulls, and beets. The carbohydrate source can also comprise starches or flours.

With respect to the meat portion, "pre-coagulation" is achieved by heating the meat components above the temperature of denaturation of the meat protein. This generally ranges from about 48°C to about 51C° for fish protein to about 80°C or higher for skeletal muscle protein of cattle. Lying somewhere in between this range are the denaturation temperatures of muscles from chicken and pigs. If there is a combination of such meats, the temperature of heating is above the denaturation temperature of the meat having the highest denaturation temperature. This can be fairly ascertained by the texture and/or the color of the mixture.

In various embodiments, the meat portion is a meat mix containing either fresh or thawed out frozen meat blocks such as meat or meat by-products. Meat materials in the meat portion can be animal protein muscle or skeletal meats of mamma is including frames, necks, and backs or meat by-products such as blood, hearts, livers, lungs, tongues, spleens, and the like. The meat materials are generally ground through different grindplates, depending on the discrete food particle size requirements in the finished product. In various embodiments, the meat and/or meat by-products are from one or more of cattle, pig, chicken, fish, shellfish, lamb, duck, turkey, and venison.

Generally, the meat portion comprises about 15 to 30% protein with a moisture content range from about 55 to 75% by weight and a fat content about 5 to 15% by weight.

The composite meat mix is mixed and heated in any suitable mixer/cooker, such as for example a twin screw mixer, a twin ribbon mixer, an overlapping paddle mixer, or a combination of the above mentioned features such as screw/ ribbon/ paddle with live steam injection. Mixing is to ensure that the meat portion is homogeneously coagulated above the temperature of protein denaturation of the meat portion. The denaturation point generally ranges from about 48°C for fish protein to about 76°C or higher for skeletal muscle protein of mammals (cattle and lamb). Lying somewhere in between this range are the denaturation temperatures of muscles from chicken and pigs. If there is a combination of such meats, the temperature of heating is above the denaturation temperature of the meat having the highest denaturation temperature.

With respect to the carbohydrate source, the carbohydrate source, when exposed to thermal treatment with added water, will go through processes including hydration, gelatinization and retrogradation. Additionally, at the elevated temperature, breakdown of complex carbohydrate to simpler carbohydrate is achieved. By properly balancing the carbohydrate source,. one can obtain the proper stickiness or binding for maintaining certain textures as desired. For example, short chain polysaccharides tend to be sticky and gluey and longer chain polysaccharides are less sticky and gluey than the shorter chain. Generally, simple sugars such as sucrose and glucose are capable of "binding" which is detrimental if one desires a friable texture of the finished product of this invention. Basically the desired texture of this hybrid diet is achieved by longer chain polysaccharide and starches, such as native or non-chemically modified starches such as modifications by heat and/or pressure. Examples of carbohydrate sources which can be employed are the standard or natural, chemically non-modified materials such as cornstarch, potato starch, cellulose and rice starch. Exemplary of these natural starches are National Starch 150, a natural corn starch, and natural potato starch. Heat and/or pressure treated materials can also be employed such as Novation 1600, a heat and pressure treated potato starch available from National Starch, Novation 2700, a heat and pressure treated corn starch also available from National Starch, and heat and pressure treated rice starch such as Remy DR. These natural and heat and/or pressure treated grains have the further advantage in maintaining proper gastrointestinal tract balance and good overall stool quality.

The one or more carbohydrate source may also be treated separately and then added to the previously "thermally set" meat. The one or more carbohydrate source is mixed and cooked at a temperature range which will achieve or essentially achieve hydration, gelatinization, and retrogradation so as to improve their binding to the meats and/or reduce the stickiness or increase the firmness of the finished product texture. Additionally, complex carbohydrate is broken down to simpler carbohydrate. An elevated temperature is needed to accomplish these properties. Basically, temperatures up to 80 to 95°C but desirably not exceeding 82 to 85°C can be employed.

The one or more carbohydrate source and water composition of step (b), with preferably added vitamins and minerals, can be a single grain or carbohydrate source, or a mixture of grains and sources such as oat fiber, cellulose, peanut hull, beet pulp, parboiled rice, and corn gluten meal with added salt, spices, seasonings, vitamins, minerals, flavorants, colorants, and the like. Dried egg can also be included in the carbohydrate source and water composition. The amount of this additive mixture is at least partially dependent on the nutritional requirements for different life stages of the animals based on Association of American Feed Control Officials regulations (AAFCO).

In various embodiments, the temperature of heating during mixing ranges from about 65°C to about 82°C to achieve or essentially achieve hydration, gelatinization and/or retrogradation of the carbohydrate source and water composition for certain desired texture of diet. Complex carbohydrate is broken down to simpler carbohydrate during this heating step.

In various embodiments, meat is precoagulated and one or more carbohydrate sources is prehydrated and pregelatinized before being combined to make a pet food composition. In preferred embodiments, the meat and the one or more carbohydrate source and water composition are further combined with a liquid composition (or "liquids") prior to final cooking. The liquid composition contains water and any ingredients needed for the formulation that were not included in the meat and grain portions. In various embodiments, the liquid composition comprises water and at least one of a colorant, a flavor enhancer, a fat, and an oil.

In an exemplary process, a meat portion or slurry is provided that makes up about 25% plus 5% or minus 10% (i.e., about 15-30 wt. %) of the total composition. A carbohydrate source is also provided that makes up about 18% plus 10% or minus 5% (i.e., about 13-28%) of the total composition, and contains whole grain, wet milled whole grain, or chemically modified grains or starch. Process water is provided at about 50% of the composition, depending on the hydration ratio and the nature and quality of the grain. A normal ratio is about one part of grain to two parts of water. A liquid composition is also provided at about 1 - 2% by weight of the total composition and contains, in addition to water, beneficial nutrients such as, without limitation, fish oil, colorants, and carnitine.

In a first step, the meat portion or slurry is coagulated and heated beyond the denaturation temperature to achieve a precoagulated composition. The required time for precoagulation varies from about 10 to 20 minutes depending on the amount of material and the target temperature. In a separate step, process water is added to hydrate the one or more carbohydrate sources at the initial stage of the process, and then brought to temperature of gelatinization at about 82 to about 87°C. The time required for the process is about 10 to 20 minutes, again depending on the amount of material and temperature. This step produces a gelatinized carbohydrate composition.

The resulting three components, i.e., the coagulated meat composition, the gelatinized carbohydrate composition, and liquids are then blended, filled, canned, and sterilized in the container to provide a composition ready for sale. For a normal continuous process such as for a 400 pound per minute throughput with three multiple thermo-screw type cooker/mixers, the process of blending, filling, canning, and sterilizing can be accomplished in about 90 to 120 seconds.

In another illustrative process, a meat portion is provided at about 15% by weight plus or minus 10% by weight (i.e., 5-25%) of the composition, and consists of animal species, such as cattle, poultry, swine, etc. A carbohydrate source is provided at about 25% plus or minus 15% by weight (i.e., 10-40%) of the composition and contains whole grain, wet milled grain, chemically modified grains, or a combination. Process water is provided at about 60% by weight of the composition, depending on the hydration ratio and the nature and quality of the carbohydrate source. A normal ratio is about 1 part grain to 2.5 parts of water. A liquid composition is aso provided that contains water and trace amounts of colorants.

In the illustrative process, the meat is coagulated and heated beyond the temperature of denaturation, i.e. to greater than about 80°C. Separately, process water is added to hydrate the carbohydrate source at the initial stage of the process and then brought to a temperature of gelatinization at 80 to 95°C. The resulting three components, i.e., coagulated meat portion, gelatinized carbohydrate source and water composition, and liquids are blended, filled, canned, and sterilized in its container to provide a pet food composition.

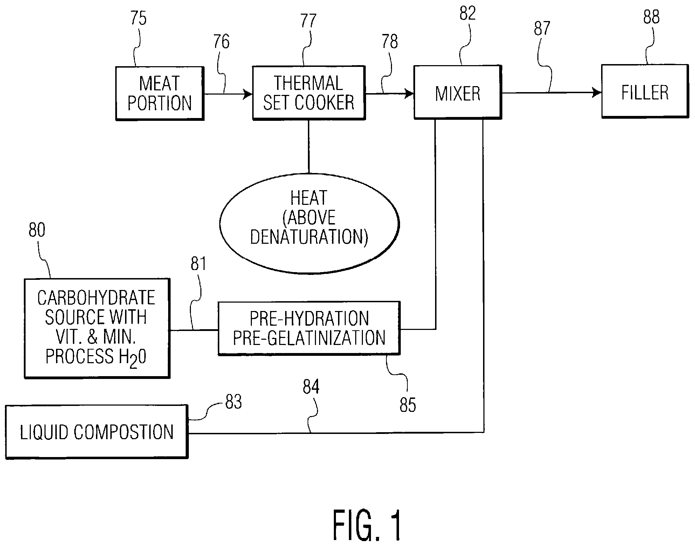

Figure 1 shows a flow diagram for a thermal set process of the disclosure. It can be implemented as a batch or as a continuous process.

In Figure 1, the meats and/or meat by-products (together making up the meat portion) are mixed in a mixer 75 and transferred through lines 76 to a cooker 77, After being cooked at a temperature above the denaturation point of the meats or the mixture of meats, the mixture is transferred to a second mixer 82 through line 78. Separately, the one or more carbohydrate sources utilized in the formulation are mixed with various vitamins and minerals in container 80 and transferred through line 81 to a cooker 85, where the one or more carbohydrate sources are pre-hydrated and pre-gelatinized, after which they transferred to the mixer 82. Also, during this time, a liquid composition is mixed together in container 83, transferred to the mixer 82 through line 84, wherein they are mixed. In mixer 82, the three components are mixed together at the prevailing temperature. Heat can be added to maintain the prevailing temperature, if desired, but it is generally not necessary nor desirable to go above about 82°C. This diet is then transferred to filler 88, through line 87. In this manner, the diet of this disclosure is readily prepared.

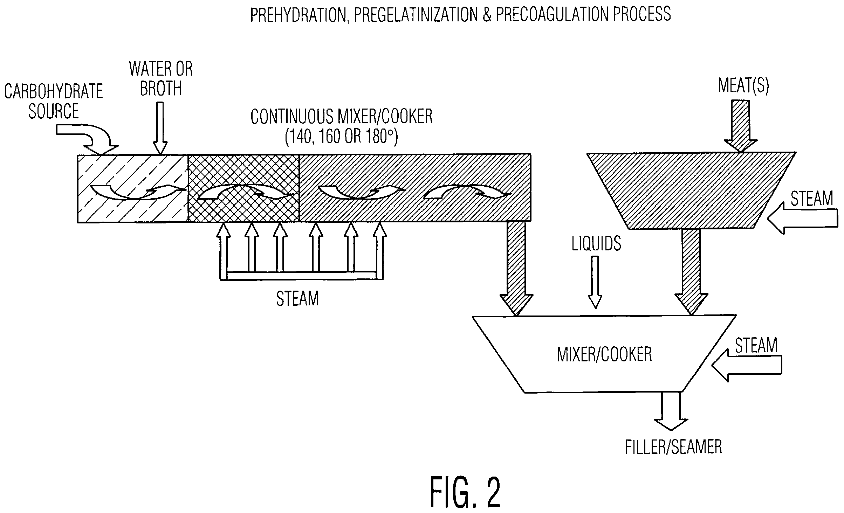

An implementation of a continuous process is shown in FIG. 2. The diagram of FIG. 2 shows the entry point of the four main components of the composition, being the carbohydrate source, the water or broth component, meat portion, and liquids. The diagram shows the separate places in the process where those components are added. As shown in FIG. 2, the one or more carbohydrate sources and water are cooked together in a continuous mixer or a cooker to provide a pre-gelatinized carbohydrate composition. Separately, a meat portion or slurry is cooked in a mixer or cooker to a temperature above the denaturization temperature of the meat portion. The products of the pre-coagulation step for the meat portion and the pre-gelatinization step for the carbohydrate composition are added separately to a mixer/cooker along with a liquid portion as shown. Steam is normally used to provide elevated temperatures. From the mixer/cooker, the combined pre-gelatinized carbohydrate source, pre-coagulated meat, and optional liquids conveyed to a filler steamer to put the finish product in cans for commercial sale.

### EXAMPLE (not claimed)

A meat portion or slurry is provided at about 25% by weight of the total composition. The meat portion or slurry contains whole turkey ground at a approximately 1 cm grind size to reduce bone particles (about 18% by weight of the composition) and poultry liver ground at approximately 1 cm grind size (about 7% of the total composition). The meat portion or slurry is cooked in a continuous thermoscrew cooker/mixer (Mapaco or Blendtech types) or in a batch (stationary) mixer with paddle and ribbon. Heating is achieved by direct steam injection. The final temperature of cooking is 65°C (beyond the temperature of denaturation). The cook time varies from 90 to 120 seconds in a continuous cooker/mixer or 8 to 12 minutes in a batch type cooker/mixer.

Separately, a carbohydrate source is provided at about 23% of the total composition. The carbohydrate source contains parboiled rice (about 13% of the total composition, yellow ground corn (about 5% of the composition), dried egg (about 4% by weight of the composition), fiber (about 0.8% by weight of the composition), flavor (about 0.3% by weight of the composition), and the balance being vitamins and minerals. Process water is added to the carbohydrate source. The actual amount of water added is about 39% by weight of the composition; the steam condensate adds about 12% by weight. The carbohydrate source and water composition is prehydrated and pregelatinized in a cooking apparatus that can be a continuous screw/cooker or a stationary batch mixer with paddle and ribbon. Heating is achieved by direct steam injection. The initial water temperature is ambient (i.e., about 21°C), and the final temperature reached to achieve gelatinization is about 80°C. Separately, a liquid composition is provided at about 1% by weight of the composition containing water, caramel color, and iron oxide. The liquid composition, the precoagulated meat composition and the pregelatinized carbohydrate source and water composition are combined and mixed in a cooker mixer without further heating. The resultant product will be filled into cans by commercially available pocket/piston type filler, subsequently filled cans are hermatically seamed in commercially seamer. Filled and seamed cans will be sterilized and packaged to be distributed in the chain of commerce..

## Claims

1. A process for preparing a pet food composition based on a meat portion and one or more carbohydrate sources, the process comprising
(a) pre-coagulating the meat portion by heating the meat portion to form a coagulated meat composition, wherein the temperature of heating is above the thermal denaturation temperature of the meat having the highest thermal denaturation temperature, wherein said thermal denaturation temperature ranges from 48°C for fish protein to 80°C for skeletal muscle protein of cattle, and lying somewhere in between the range from 48°C to 80°C the thermal denaturation temperature of muscles from chicken and pigs;
(b) combining the one or more carbohydrate sources and water to form a carbohydrate composition, wherein the one or more carbohydrate sources comprise starch or flour;
(c) heating the carbohydrate composition to a temperature of gelatinization; and
(d) combining the meat composition and the carbohydrate composition.

2. A process according to claim 1, further comprising heating the combined meat composition and carbohydrate composition in step (d) for a further time.

3. A process according to claim 1 or claim 2, wherein the meat portion comprises the skeletal muscle protein of cattle.

4. A process according to any of claims 1 to 3, wherein step (d) comprises combining the meat composition, the carbohydrate composition and a liquid composition, wherein the liquid composition comprises at least one of a colorant, a flavor enhancer, a fat, and an oil.

5. A process according to any preceding claim, wherein steps (b) and (c) are carried out in a thermal screw cooker.

6. A process according to claim 5, wherein residence time in the thermal screw cooker is 60 to 90 seconds and temperature at the outlet is about 80°C.

7. A process according to any preceding claim, wherein the pet food composition comprises 10 to 35% by weight of the one or more carbohydrate sources.

8. The process according to claim 7, wherein the pet food composition comprises 13 to 28% by weight of the one or more carbohydrate sources.

9. A process according to any preceding claim, wherein the meat portion is 15 to 30% by weight of the composition.

10. A process according to any preceding claim, wherein the loaf product is suitable for canines.

11. A process according to any preceding claim, wherein the one or more carbohydrate sources comprise one or more of grains, ground grains, partially ground grains, flour, and starch.

12. A process according to any preceding claim, wherein the one or more carbohydrate sources are derived from one or more of corn, wheat, potato, rice, oat, barley, milo, flax, fibrim, peanut hulls, and beets.

## Patentansprüche

1. Verfahren zum Herstellen einer auf einem Fleischanteil und einer oder mehreren Kohlenhydratquellen basierenden Tiernahrungszusammensetzung, wobei das Verfahren umfasst
(a) Präkoagulieren des Fleischanteils durch Erhitzen des Fleischanteils, um eine koagulierte Fleischzusammensetzung zu bilden, wobei die Temperatur des Erhitzens über der thermischen Denaturierungstemperatur des Fleisches mit der höchsten thermischen Denaturierungstemperatur liegt, wobei sich die thermische Denaturierungstemperatur im Bereich von 48°C für Fischprotein bis 80°C für Skelettmuskelprotein von Rind bewegt, und irgendwo zwischen dem Bereich von 48°C bis 80°C der thermischen Denaturierungstemperatur von Muskeln aus Huhn und Schweinen liegt;
(b) Kombinieren der einen oder mehreren Kohlenhydratquellen und Wasser, um eine Kohlenhydratzusammensetzung zu bilden, wobei die eine oder mehreren Kohlenhydratquellen Stärke oder Mehl umfassen;
(c) Erhitzen der Kohlenhydratzusammensetzung auf eine Geliertemperatur; und
(d) Kombinieren der Fleischzusammensetzung und der Kohlenhydratzusammensetzung.

2. Verfahren nach Anspruch 1, das des Weiteren Erhitzen der kombinierten Fleischzusammensetzung und Kohlenhydratzusammensetzung in Schritt (d) für eine weitere Zeit umfasst.

3. Verfahren nach Anspruch 1 oder Anspruch 2, wobei der Fleischanteil das Skelettmuskelprotein von Rind umfasst.

4. Verfahren nach einem beliebigen der Ansprüche 1 bis 3, wobei Schritt (d) Kombinieren der Fleischzusammensetzung, der Kohlenhydratzusammensetzung und einer flüssigen Zusammensetzung umfasst, wobei die flüssige Zusammensetzung mindestens eines von einem Farbstoff, einem Geschmacksverstärker, einem Fett und einem Öl umfasst.

5. Verfahren nach einem beliebigen voranstehenden Anspruch, wobei Schritte (b) und (c) in einem thermischen Schneckenkocher ausgeführt werden.

6. Verfahren nach Anspruch 5, wobei die Verweilzeit im thermischen Schneckenkocher 60 bis 90 Sekunden beträgt, und die Temperatur am Auslass etwa 80°C beträgt.

7. Verfahren nach einem beliebigen voranstehenden Anspruch, wobei die Tiernahrungszusammensetzung 10 bis 35% bezogen auf das Gewicht der einen oder mehreren Kohlenhydratquellen umfasst.

8. Verfahren nach Anspruch 7, wobei die Tiernahrungszusammensetzung 13 bis 28% bezogen auf das Gewicht der einen oder mehreren Kohlenhydratquellen umfasst.

9. Verfahren nach einem beliebigen voranstehenden Anspruch, wobei der Fleischanteil 15 bis 30% bezogen auf das Gewicht der Zusammensetzung beträgt.

10. Verfahren nach einem beliebigen voranstehenden Anspruch, wobei der Produktlaib für Hunde geeignet ist.

11. Verfahren nach einem beliebigen voranstehenden Anspruch, wobei die eine oder mehreren Kohlenhydratquellen eines oder mehrere von Getreide, gemahlenem Getreide, teilweise gemahlenem Getreide, Mehl und Stärke umfassen.

12. Verfahren nach einem beliebigen voranstehenden Anspruch, wobei die eine oder mehreren Kohlenhydratquellen aus einem oder mehreren von Mais, Weizen, Kartoffel, Reis, Hafer, Gerste, Milo, Flachs, Fibrim, Erdnussschalen und Rüben abgeleitet sind.

## Revendications

1. Procédé de préparation d'une composition alimentaire pour animal de compagnie à base d'une fraction carnée et d'une ou de plusieurs sources de glucides, le procédé comprenant
(a) la pré-coagulation de la fraction carnée par chauffage de la fraction carnée pour former une composition de viande coagulée, dans laquelle la température de chauffage est supérieure à la température de dénaturation thermique de la viande ayant la température de dénaturation thermique la plus élevée, dans laquelle ladite température de dénaturation thermique est comprise entre 48 °C pour les protéines de poisson et 80 °C pour les protéines de muscle squelettique de bovins, et se situant quelque part dans l'intervalle allant de 48 °C à 80 °C la température de dénaturation thermique des muscles de poulet et de porcs ;
(b) la combinaison de la une ou plusieurs sources de glucides et d'eau pour former une composition de glucides, dans laquelle la une ou plusieurs sources de glucides comprend de l'amidon ou de la farine ;
(c) le chauffage de la composition de glucides à une température de gélatinisation ; et
(d) la combinaison de la composition de viande et de la composition de glucides.

2. Procédé selon la revendication 1, comprenant en outre le chauffage de la composition de viande et de la composition de glucides combinées à l'étape (d) pendant un temps supplémentaire.

3. Procédé selon la revendication 1 ou la revendication 2, dans lequel la fraction carnée comprend la protéine de muscle squelettique de bovins.

4. Procédé selon l'une quelconque des revendications 1 à 3, dans lequel l'étape (d) comprend la combinaison de la composition de viande, de la composition de glucides et d'une composition liquide, dans laquelle la composition liquide comprend au moins un élément parmi un colorant, un exhausteur de goût, une matière grasse et une huile.

5. Procédé selon l'une quelconque des revendications précédentes, dans lequel les étapes (b) et (c) sont effectuées dans un cuiseur thermique à vis.

6. Procédé selon la revendication 5, dans lequel le temps de séjour dans le cuiseur thermique à vis est compris entre 60 et 90 secondes et la température à la sortie est d'environ 80 °C.

7. Procédé selon l'une quelconque des revendications précédentes, dans lequel la composition d'aliments pour animal de compagnie comprend 10 à 35 % en poids de la une ou plusieurs sources de glucides.

8. Procédé selon la revendication 7, dans lequel la composition alimentaire pour animal de compagnie comprend 13 à 28 % en poids de la une ou plusieurs sources de glucides.

9. Procédé selon l'une quelconque des revendications précédentes, dans lequel la fraction carnée représente 15 à 30 % en poids de la composition.

10. Procédé selon l'une quelconque des revendications précédentes, dans lequel le produit en pain est approprié pour les canidés.

11. Procédé selon l'une quelconque des revendications précédentes, dans lequel la une ou plusieurs sources de glucides comprennent un ou plusieurs éléments parmi les grains, les grains moulus, les grains partiellement moulus, la farine et l'amidon.

12. Procédé selon l'une quelconque des revendications précédentes, dans lequel la une ou plusieurs sources de glucides sont dérivées d'un ou plusieurs éléments parmi le maïs, le blé, la pomme de terre, le riz, l'avoine, l'orge, le milo, le lin, le Fibrim, les cosses d'arachide et la betterave.
